Europäisches Patentamt

European Patent Office

Office européen des brevets

(11) Veröffentlichungsnummer: **0 065 691**
**A1**

## (12) EUROPÄISCHE PATENTANMELDUNG

(21) Anmeldenummer: **82104043.3**

(22) Anmeldetag: **07.05.82**

(51) Int. Cl.³: **C 08 J 5/18**
**C 08 F 38/02, B 05 D 7/14**
**B 05 D 7/04, C 08 J 7/04**
**C 08 J 5/12**

(30) Priorität: **22.05.81 DE 3120441**

(43) Veröffentlichungstag der Anmeldung:
**01.12.82 Patentblatt 82/48**

(84) Benannte Vertragsstaaten:
**BE DE FR GB**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(72) Erfinder: **Penzien, Klaus, Dr.**
**Bensheimer Ring 18**
**D-6710 Frankenthal(DE)**

(72) Erfinder: **Schlag, Johannes, Dr.**
**Leuschnerstrasse 36**
**D-6700 Ludwigshafen(DE)**

(54) Verfahren zur Herstellung von filmförmigem Poly(acetylen).

(57) Die Erfindung betrifft ein Verfahren zur Herstellung von filmförmigem Poly(acetylen) durch Polymerisation von Acetylen, gegebenenfalls im Gemisch mit Di- und/oder Poly(alkinen), auf festen Trägeroberflächen aus Metallen mit aufgerauhten oder gelochten Oberflächen, Polyamid- oder Polyesterfolien in Gegenwart von aktiven Übergangsmetallkatalysatoren.

Die Metallträger werden durch Schmirgeln, Sandbestrahlen oder Lochen mit einer aufgerauhten Oberfläche versehen.

EP 0 065 691 A1

## Verfahren zur Herstellung von filmförmigem Poly(acetylen)

Die Erfindung betrifft ein Verfahren zur Herstellung von filmförmigem Poly(acetylen) durch Polymerisation von Acetylen, gegebenenfalls im Gemisch mit Di- und/oder Poly(alkylen), auf festen Trägeroberflächen in Gegenwart von aktiven Übergangsmetallkatalysatoren.

Bei derartigen Verfahren werden Poly(acetylen)filme erhalten, die von der Trägersubstanz abgelöst werden können.

Die Herstellung von Poly(acetylen) durch Polymerisation von Acetylen ist bereits bekannt und z.B. in den Literaturstellen: "Annalen" 560, (1948), Seiten 10ff; "Kogyo Kagaku Zasshi" 65, (1962), Seiten 720ff; "Journal of Organic Chemistry" 27, (1962), Seiten 1591ff und 3752ff oder DE-OS 29 12 572 beschrieben.

Shirakawa et al. ("Journal of Polymer Science, Polymer Chemical Edition" 12, (1974), Seiten 11ff) haben erstmals gezeigt, daß mit aktiven Zieglerkatalysatoren filmförmiges Poly(acetylen) hergestellt werden kann. Nach den bekannten Methoden werden hochmolekulare Produkte erhalten, die in den üblichen Lösungsmitteln vollkommen unlöslich sind und als amorphe bis hochkristalline Materialien anfallen.

Ein wesentlicher Parameter für jede technische, diskontinuierliche oder kontinuierliche Produktion von Poly(acetylen)filmen ist die Haftung auf Trägern. Während in der zitierten vorgängigen Literatur bezüglich Katalyse und Extraktion brauchbare Angaben zu finden sind, ist über die Haftung der Poly(acetylen)filme, außer auf Glasoberflächen, nichts bekannt.

Fre/P

Glas als Träger, welches Shirakawa in Laborversuchen verwendet, ist aus mehreren Gründen technisch wenig geeignet. Bei der diskontinuierlichen Herstellung von Poly(acetylen)-filmen auf Glasplatten stört der schlechte Wärmeübergang. Bei der besonders zu bevorzugenden kontinuierlichen Herstellung von Poly(acetylen)filmen, die mittels eines Trägerbandes erfolgen muß, ist die Verwendung von Glas als Träger von vornherein ausgeschlossen.

Es besteht also die technische Aufgabe, einen möglichst biegsamen Träger für Poly(acetylen)filme aufzufinden, sowie die Haftung zwischen den Filmen und dem Träger gezielt einzustellen und zu beherrschen.

Diese Aufgabe wird dadurch gelöst, daß als Träger Metalle mit aufgerauhter oder gelochter Oberfläche, Polyamid- oder Polyesterfolien verwendet werden. Zweckmäßig erhalten die Metallträger durch Schmirgeln, Sandbestrahlen oder Lochen eine aufgerauhte Oberfläche.

Unter filmförmigem Poly(acetylen) werden 0,1 bis 1000, bevorzugt 0,1 bis 500 /um, dünne Filme verstanden, die bei der Herstellung zunächst auf der festen Trägeroberfläche haften und nach geeigneten Verfahren abgelöst werden müssen. Die Polymerisation oder Copolymerisation führt direkt zu den flexiblen Poly(acetylen)filmen, die sich auf der Trägerfolie befinden.

Die Polymerisation von Acetylen selbst ist nicht Gegenstand der vorliegenden Erfindung. Sie ist in der eingangs zitierten Literatur sowie in der Druckschrift DE-OS 31 00 581 beschrieben. Als Di- und/oder Poly(alkine), welche gegebenenfalls zusammen mit dem Acetylen zu Copolymerisaten umgesetzt werden, kommen hierbei insbesondere in Frage:

Butadiin, Hexadiin, Octadiin u.a.

Man verwendet zweckmäßig Monomermischungen, die bis zu 50 Mol-% Di- oder Poly(alkine), vorzugsweise zwischen 5 und 20 Mol-% Alkine, enthalten. Als Übergangsmetallkatalysatoren kommen insbesondere die in der DE-OS 29 12 572 angeführten Verbindungen in Betracht. Besonders geeignet ist ein Zieglerkontakt aus $Al(C_2H_5)_3$ und $Ti(OC_4H_9)_4$. Das Mischungsverhältnis aus Aluminiumtrialkyl und Titantetraoxialkyl liegt zwischen 0,5 : 1 und 1 : 0,5, vorzugsweise um 1 : 1, jeweils bezogen auf Gewichtsteile.

Nach erfindungsgemäßem Verfahren werden als Träger Metalle mit aufgerauhter oder gelochter Oberfläche, Polyamid- oder Polyesterfolien verwendet.

Metallträger geben nur dann gute Haftung mit Poly(acetylen)-filmen, wenn sie eine geeignete Oberflächenbehandlung erfahren haben. Schmirgeln, Sandstrahlen oder Lochen sind geeignete Oberflächenbehandlungen. Metallträger mit glatter Oberfläche geben schlechte Haftung.

Kunststoff-Folien geben nur dann Haftung mit Poly((acetylen)filmen, wenn das Polymer stark polare Gruppen aufweist. So zeigen Polyamidfolien mit Poly(acetylen)beschichtungen eine derart gute Haftung, daß die zerstörungsfreie Trennung der zwei Schichten unmöglich wird. Auch Polyesterfolien sind für das erfindungsgemäße Verfahren geeignet, die homogene Beschichtung aus Poly(acetylen)film kann aber leicht von der Polyesterträgerfläche abgelöst werden. Andere Kunststoffträger ergeben sehr schlechte Haftung, beispielsweise solche aus Polyethylen, Polypropylen und PVC, so daß sie für die Herstellung von Poly(acetylen)filmen nicht geeignet sind.

0065691

Zur Herstellung der Poly(acetylen)folien geht man so vor, daß man zunächst den erfindungsgemäß anzuwendenden Träger mit dem Polymerisationskatalysator beschichtet und mit Acetylen begast. Je nach Art des Kontakts, auch bei zu niedriger Kontaktkonzentration, können sich auch gelartige Beschichtungen ausbilden, die man durch Pressen auf dem Träger auch verfestigen kann. Im nächsten Verfahrensschritt befreit man den Poly(acetylen)film vom eingeschlossenen Polymerisationskatalysator durch Extrahieren mit Lösungsmitteln. Hierzu verwendet man bevorzugt solche, die den Kontakt homogen auflösen, den Träger nicht verändern sowie vom extrahierten Kontakt destillativ leicht zu trennen sind. Geeignete Extraktionsmittel sind z.B. aromatische oder aliphatische Kohlenwasserstoffe, organische Ether, Ester oder Ketone. Danach trocknet man den beschichteten und extrahierten Träger und trennt den einwandfrei ausgebildeten und nicht abgelösten Poly(acetylen)film vom Träger mechanisch ab.

Die folgenden Beispiele zeigen den starken Einfluß des Trägers auf das Ergebnis des jeweiligen Beschichtungsversuchs.

Beispiel 1

Eine Polyamidfolie, bestehend aus Ultramid $^R$-B-4 der Firma BASF, wird mit aktivem Ziegler-Kontakt aus $Al(C_2H_5)_3$ und $Ti(OC_4H_9)_4$ beschichtet, mit Acetylen bei $-20^\circ C$ begast, mit Toluol extrahiert und im Stickstoffstrom bei $+50^\circ C$ getrocknet. Die Poly(acetylen)schicht zeigt auf dem Polyamid sehr gute Haftung, sie kann ohne Zerstörung nicht abgelöst werden.

## Beispiel 2

Eine Polyesterfolie, bestehend aus Hostafan ® der Firma Hoechst, wird gemäß Beispiel 1 mit Poly(acetylen)film beschichtet, extrahiert und getrocknet. Es bildet sich eine homogene Beschichtung aus, die nach dem Trocknen leicht vom Polyesterträger abgelöst werden kann.

## Beispiele 8 bis 12

Edelstahl-, Gold-, Aluminium-, Messing- und Bronzeträger mit sandgestrahlten rauhen Oberflächen werden gemäß Beispiel 1 beschichtet. Homogenität und Haftung der extrahierten und getrockneten Beschichtung sind gut, die Beschichtungen lassen sich vom Träger mechanisch ablösen.

## Beispiel 13 bis 17

Edelstahl-, Gold-, Aluminium-, Messing- und Bronzeträger mit geschmirgelten Oberflächen werden gemäß Beispiel 1 beschichtet und untersucht. Homogenität und Haftung sind die gleichen wie in den Beispielen 8 bis 12.

## Beispiele 18 bis 22

In Träger aus Edelstahl, Gold, Aluminium, Messing und Bronze, die eine glatte Oberfläche haben, werden Löcher vom Durchmesser 1 mm im Abstand von jeweils 15 mm eingestanzt. Danach verfährt man gemäß Beispiel 1. Homogenität und Haftung der extrahierten und getrockneten Beschichtung sind gut, die Beschichtungen lassen sich vom Träger mechanisch ablösen.

0065691

### Vergleichsbeispiel 1, gemäß DE-OS 31 00 581

Eine unbehandelte Edelstahlplatte mit glatter Oberfläche wird wie im Beispiel 1 mit Poly(acetylen)film beschichtet, extrahiert und getrocknet. Die gebildete Beschichtung ist nicht homogen, sie löst sich bereits während des Arbeitsgangs teilweise vom Träger ab.

### Vergleichsbeispiel 2, gemäß DE-OS 31 00 581

Wie im Beispiel 1 werden Gold-, Aluminium-, Messing- und Bronze-Träger, jeweils mit glatter Oberfläche, mit Poly(acetylen) beschichtet, extrahiert, getrocknet und auf Haftung geprüft. Die gebildete Beschichtung ist nicht homogen, sie löst sich bereits während des Arbeitsgangs teilweise vom Träger ab.

### Vergleichsbespiel 3-6, gemäß DE-OS 31 00 581

Kunststoffträgerfolien aus Poly(ethylen), Poly(propylen), Poly(styrol) oder Poly(vinylchlorid) werden wie im Beispiel 1 beschichtet, extrahiert und getrocknet. Es bilden sich keine homogenen Beschichtungen aus, so daß die Haftung nicht untersucht werden kann.

Patentansprüche

1.  Verfahren zur Herstellung von filmförmigem Poly(acetylen) durch Polymerisation von Acetylen, gegebenenfalls im Gemisch mit Di- und/oder Poly(alkinen), auf festen Trägeroberflächen in Gegenwart von aktiven Übergangsmetallkatalysatoren, dadurch gekennzeichnet, daß als Träger Metalle mit aufgerauhter oder gelochter Oberfläche, Polyamid- oder Polyesterfolien verwendet werden.

2.  Verfahren nach Anspruch 1, dadurch gekennzeichnet, daß die Metallträger durch Schmirgeln, Sandbestrahlen oder Lochen eine aufgerauhte Oberfläche erhalten haben.

**0065691**

Nummer der Anmeldung

**Europäisches Patentamt**

## EUROPÄISCHER RECHERCHENBERICHT

EP 82104043.3

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| D,A | <u>DE - A1 - 2 912 572</u> (BASF AG)<br><br>* Ansprüche; Seite 5, Zeilen 3-7 *<br><br>---- | 1 | C 08 J 5/18<br>C 08 F 38/02<br>B 05 D 7/14<br>B 05 D 7/04<br>C 08 J 7/04<br>C 08 J 5/12 |

**RECHERCHIERTE SACHGEBIETE (Int. Cl.³)**

C 08 J

C 08 F 38/00

C 08 F 238/00

C 08 L 49/00

B 05 D

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 17-08-1982 | WEIGERSTORFER |